# EUROPEAN PATENT SPECIFICATION

(11) **EP 1 984 967 B1**
(45) Date of publication and mention of the grant of the patent: **19.11.2014**
(21) Application number: 07762626.5
(22) Date of filing: 30.01.2007
(51) Int. Cl.: H01M 4/88, H01M 8/10

(54) **METHOD OF FORMING MEMBRANE ELECTRODE ASSEMBLIES FOR ELECTROCHEMICAL DEVICES**
VERFAHREN ZUR HERSTELLUNG VON MEMBRANELEKTRODENANORDNUNGEN FÜR ELEKTROCHEMISCHE VORRICHTUNGEN
PROCEDE DE FORMATION D'ASSEMBLAGES D'ELECTRODES DE MEMBRANE POUR DISPOSITIFS ELECTROCHIMIQUES

(30) Priority: 31.01.2006 US 373746
(43) Date of publication of application: 29.10.2008
(73) Proprietor: Daimler AG, 70327 Stuttgart (DE)
(72) Inventor: DE HAAN, David, S., Burnaby, British Columbia V5E 1R1 (CA); THAM, Ben, Coquitlam, British Columbia V3K 3J5 (CA); CATOIU, Liviu, New Westminster, British Columbia V3M 5V3 (CA)
(74) Representative: JENSEN & SON
(86) International application number: PCT/US2007/002795
(87) International publication number: WO 2007/089908

(56) References cited:
- EP-A- 1 489 677
- JP-A- 7 176 317
- US-A1- 2002 064 593
- US-A1- 2002 071 980
- MEHTA V ET AL: "Review and analysis of PEM fuel cell design and manufacturing" JOURNAL OF POWER SOURCES, ELSEVIER, AMSTERDAM, NL, vol. 114, no. 1, 25 February 2003 (2003-02-25), pages 32-53, XP004412816 ISSN: 0378-7753

## Description

### BACKGROUND OF THE INVENTION

### Field of the Invention

The present invention is generally directed toward improved methods for making gas diffusion electrodes for electrochemical devices, and more particularly, to methods of achieving a smoother surface of the gas diffusion electrodes at an ion-exchange membrane interface.

### Description of the Related Art

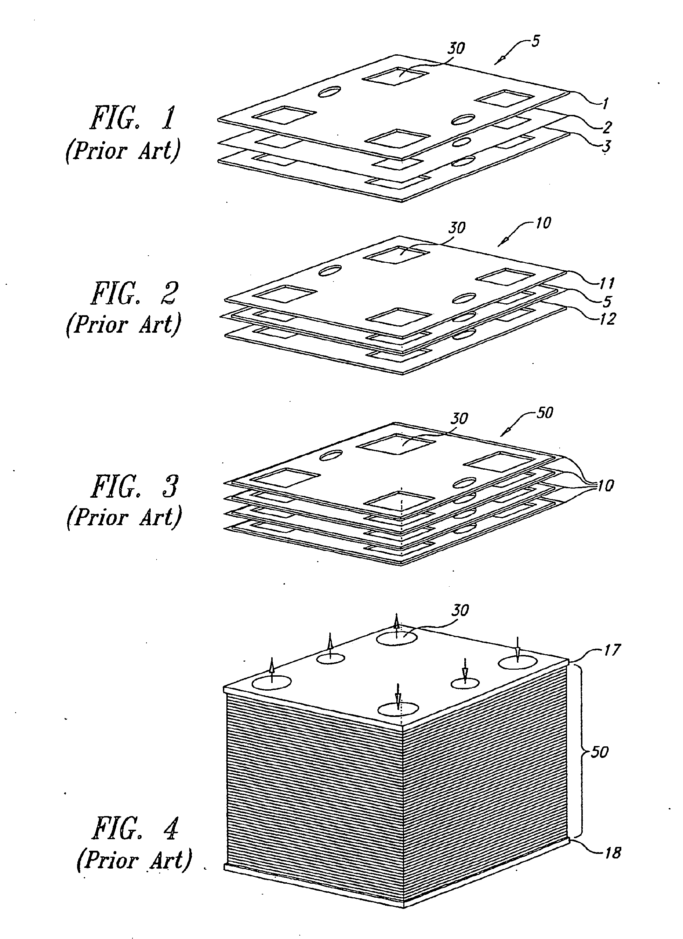

Electrochemical cells comprising ion exchange membranes, such as proton exchange membranes (PEMs), for example, polymer electrolyte membranes may be operated as fuel cells, wherein a fuel and an oxidant are electrochemically converted at the cell electrodes to produce electrical power, or as electrolyzers, wherein an external electrical current is passed between the cell electrodes, typically through water, resulting in generation of hydrogen and oxygen at the respective electrodes. Figures 1-4 collectively illustrate a typical design of a conventional membrane electrode assembly 5, an electrochemical cell 10 comprising a PEM layer 2, and a stack 50 of such cells.

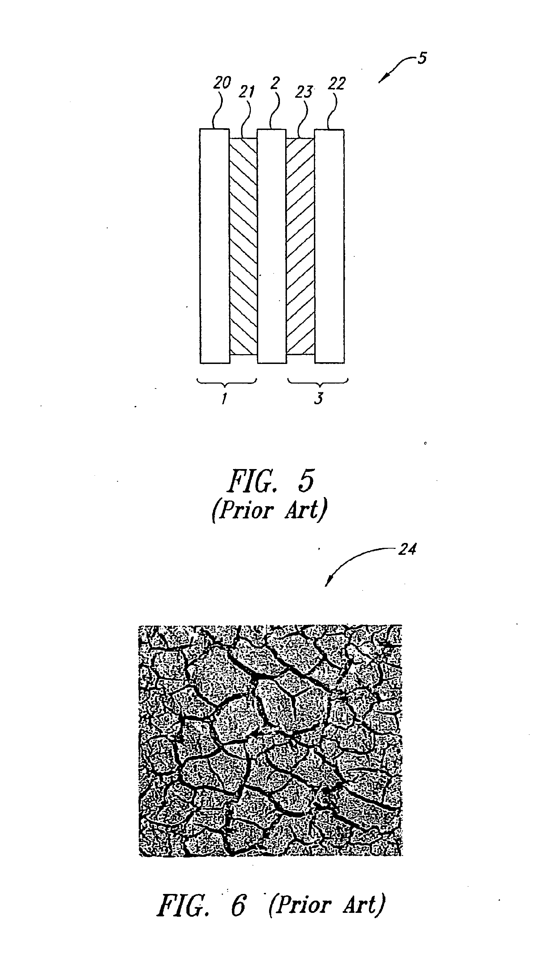

Each cell 10 comprises a membrane electrode assembly ("MEA") 5 such as that illustrated in an exploded view in Figure 1. The MEA 5 comprises an ion exchange membrane 2 interposed between first and second electrode layers 1, 3, which are typically porous and electrically conductive. As illustrated in Figure 5, the electrode layers 1, 3 typically comprise a gas diffusion layer 20, 22 and an electrocatalyst 21, 23 positioned at an interface with the ion-exchange membrane 2 for promoting the desired electrochemical reaction.

In an individual cell 10, illustrated in an exploded view in Figure 2, an MEA 5 is interposed between first and second cell separator plates 11, 12, which are typically fluid impermeable and electrically conductive. The cell separator plates 11, 12 are manufactured from non-metals, such as graphite; from metals, such as certain grades of steel or surface treated metals; or from electrically conductive plastic composite materials.

Electrochemical cells 10 with ion exchange membranes 2 are advantageously stacked to form a stack 50 (see Figure 4) comprising a plurality of cells disposed between first and second end plates 17, 18. A compression mechanism is typically employed to hold the cells 10 tightly together, to maintain good electrical contact between components, and to compress the seals. In the embodiment illustrated in Figure 3, each cell 10 comprises a pair of cell separator plates 11, 12 in a configuration with two cell separator plates per MEA 5. Cooling spaces or layers may be provided between some or all of the adjacent pairs of cell separator plates 11, 12 in the stack 50. An alternate configuration (not shown) has a single separator plate, or "bipolar plate," interposed between a pair of MEAs 5 contacting the cathode of one cell and the anode of the adjacent cell, thus resulting in only one separator plate per MEA 5 in the stack 50 (except for the end cell). Such a stack 50 may comprise a cooling layer interposed between every few cells 10 of the stack, rather than between each adjacent pair of cells.

The illustrated cell elements have openings 30 formed therein which, in the stacked assembly, align to form gas manifolds for supply and exhaust of reactants and products, respectively, and, if cooling spaces are provided, for a cooling medium.

The gas diffusion layers 20, 22 of the respective electrode layers 1, 3, illustrated in Figure 5, comprise a substrate with a porous structure, which renders it permeable to fluid reactants and products in the fuel cell.

Fluid reactants may be supplied to the electrode layers 1, 3 in either gaseous or liquid form. In electrochemical fuel cells employing hydrogen as the fuel and oxygen as the oxidant, the catalyzed reaction at the anode produces hydrogen cations (protons) and electrons from the fuel. The gaseous reactants move across and through the gas diffusion layer 20 to react at the electrocatalyst 21. The ion-exchange membrane 2 facilitates the migration of protons from the anode 1 to the cathode 3 while electrons travel from the anode 1 to the cathode 3 by an external load. At the electrocatalyst layer 23 of the cathode 3, oxygen reacts with the protons that have crossed the membrane 2 and the electrons to form water as the reaction product.

The electrocatalysts 21, 23 are typically disposed in a layer at each interface between the membrane 2 and the gas diffusion layers 20, 22, to induce the desired electrochemical reaction in the MEA 5. The electrocatalysts 21, 23 may be a metal black, an alloy or a supported catalyst, for example, platinum on carbon. The catalyst layers 21, 23 typically contain an ionomer, which may be similar to that used for the ion-exchange membrane (for example, up to 30% by weight NAFION^{®} brand perfluorosulfonic-based ionomer). The catalyst layers 21, 23 may also contain various binders, such as polytetrafluoroethylene (PTFE). The electrocatalysts 21, 23 may be disposed as a layer on the gas diffusion layers 20, 22 to form the electrode layers 1, 3 or disposed as a layer on the ion-exchange membrane 2.

Materials commonly used as gas diffusion layers 20, 22 or as starting materials to form gas diffusion layers 20, 22 include carbon fiber paper, woven and nonwoven carbon fabrics, metal mesh or gauze, and other woven and nonwoven materials. Such materials are commercially available in flat sheets and, when the material is sufficiently flexible, in rolls. Gas diffusion layers 20, 22 tend to be highly electrically conductive and macroporous and may also contain a particulate electrically conductive material and a binder. The substrate may be pre-treated with a water-repellant material, for example, a fluororesin such as polytetrafluoroethylene, or with a mixture of a water repellent material and an electrically conductive material, such as a fluororesin and carbon black, to enhance water repellency. The gas diffusion layers 20, 22 may also comprise a sub-layer (typically comprising an electrically conductive material, such as carbon and graphite, and/or a water-repellent material, such as a fluororesin, or a mixture thereof) coated on one side thereon in order to reduce porosity, provide a surface for electrocatalysts 21, 23, reduce surface roughness or achieve some other objective. The sub-layer can be applied by any of the numerous coating, impregnating, filling or other techniques known in the art. For example, the sub-layer may be in the form of an ink or paste that is applied to the substrate and may at least partially penetrate into the substrate.

In preparing the electrode layers 1, 3, it has been found desirable to reduce the surface roughness. Reduced surface roughness allows the electrode layers 1, 3 to sustain an improved bond with thin ion-exchange membranes 2. Peaks in the surface of one or both electrode layers 1, 3 may lead to perforations or leaks in ion-exchange membranes 2 when assembled into an MEA 5. The electrode layers 1, 3 may cause perforations or leaks by penetrating the ion-exchange membrane 2 or by reducing the thickness of the ion-exchange membrane 2. Pores or depressions in the surface of the electrode layers 1, 3 may also cause leaks, for example, as compressive stresses cause the membrane 2 to flow into pores and other surface depressions when the MEA 5 is heated, such as during bonding and fuel cell operation.

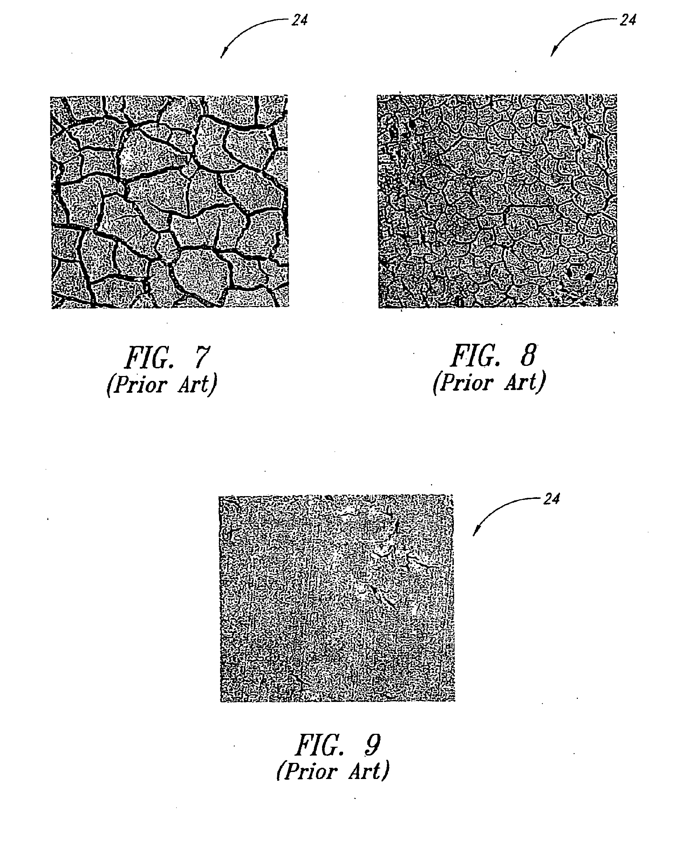

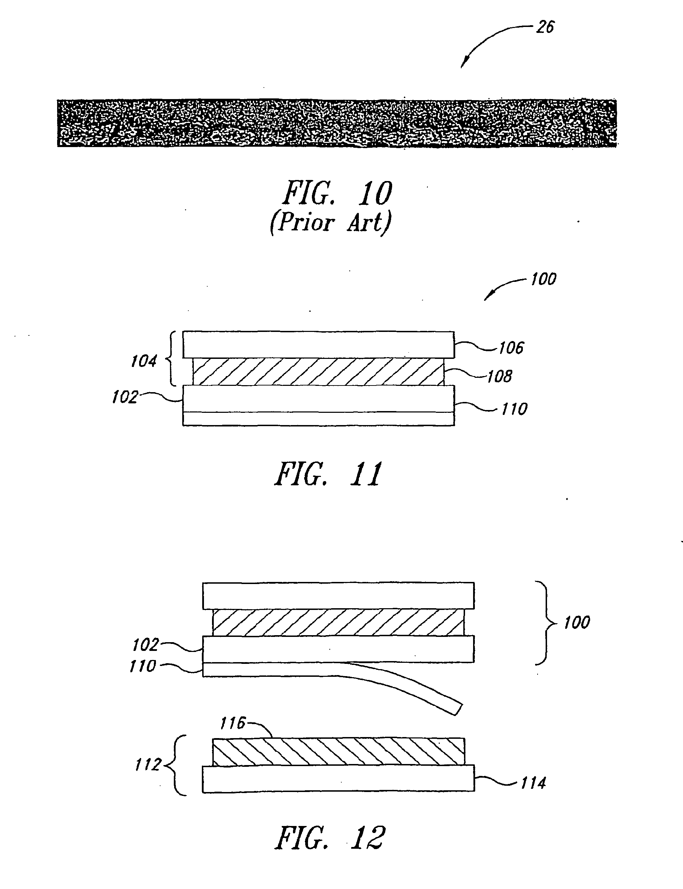

Accordingly, a smoother surface of the electrode layers 1, 3, reduces the quantity and severity of cracks in the electrode layers 1, 3, and in the ion-exchange membrane 2, preventing adverse fluid leaks that may result in fuel waste, corrosion, or mass transport losses. Examples of such cracks are shown in the optical images 24 of Figures 6-9. Figure 10, which is a scanning electron micrograph 26 of a cross-section view of the electrode of Figure 7, further reveals the inconsistencies and incontiguities in existing electrode layers 1, 3.

Various methods of assembling MEAs 5 have been proposed to reduce the surface roughness of the electrode layers 1, 3 at the ion-exchange membrane 2 interface. These methods typically include controlling the thickness of the electrocatalyst as described in U.S. Publication No. 2004/0209138, using roller compaction as elicited in U.S. Publication No. 2002/0192383, using heated rollers as explained in Japanese Publication No. 2001-038157, and compacting of multi-layered catalyst layers as provided in International Publication No. WO 02/089237. A further proposed method of producing MEAs 5 includes drying the catalyst ink during compaction. Yet other proposed methods include electrostatically charging the electrocatalysts 21, 23 prior to application onto the ion-exchange membrane 2 or to the gas diffusion layers 20, 22 of the electrode layers 1, 3.

Although the above-described methods have introduced limited reduction of surface roughness of the electrode layers 1, 3 at the ion-exchange membrane 2 interface, obstacles persist. For example, surface roughness continues to present difficulties in bonding the membrane 2 to the electrode layers 1, 3. Additionally, cracks, similar to those in Figures 6-9, continue to emerge, resulting in inefficient fluid diffusion, fuel waste, mass transport losses and corrosion of the MEA 5 components. Furthermore, processes such as hot compaction are expensive and time-consuming. Other methods such as Teflon-based electrocatalysts for electrode layers 1, 3, such as cathodes, have resulted in mass transport losses.

There remains a need for improved methods, which are less time- consuming and relatively inexpensive, to reduce surface roughness of electrode layers in electrochemical cells, achieve a better bond with thin membranes and prevent the onset of cracks.

US 2002/0064593 discloses a process for producing a membrane electrode assembly for fuel cells containing a polymer electrolyte membrane having first and second surfaces with a catalyst and a water repellant gas distribution layer. The catalysts are applied as inks using organic or water-based solvents to one of the membrane and to the gas distribution layer. The gas distribution layer comprises a water repellant coating if the catalyst is formed of a water-based ink; however, organic solvents are preferred to water-based inks because they produce a greater degree of swelling of the catalyst, which causes better bonding. The water repellant coating may be formed by a carbon-containing hydrophobic microporous layer by applying a paste of carbon black and polytetrafluouroethylene and drying and calcinating it at temperatures of 340-370 C. Maximum swelling of the membrane is desired for improved bonding. The catalyst layer is laid onto the surface to which it is to be bonded after being applied to one of the gas distribution and the membrane layers, or the bonding may be produced at high temperatures and under pressure.

JP 7-176317 discloses to form a catalyst layer on a membrane, to remove a supporting board, and to form a catalyst layer on an opposite side of the membrane. The catalyst layers may be bonded by hot pressing under pressure.

EP 1 489 677 discloses to provide a first gas diffusion layer, to provide a one-sided catalyst coated ion exchange membrane, to provide a gas diffusion electrode having a second catalyst layer, to bond the first gas diffusion layer to the membrane, and to bond the gas diffusion electrode to the membrane.

### BRIEF SUMMARY OF THE INVENTION

Methods of forming a membrane electrode assembly according to the appended independent claims 1 and 13 are provided.

In one example, a method of forming a membrane electrode assembly (MEA) having an ion-exchange membrane interposed between first and second electrode layers includes bonding a first side of the first electrode layer including a first electrocatalyst layer and a first gas diffusion layer, to a first side of the membrane, to substantially support the membrane and form a partial MEA. The method may further include bonding the partial MEA to the second electrode layer including a second electrocatalyst and a second gas diffusion layer, to achieve substantial contiguity, between a second side of the membrane and a first side of the second electrode layer.

In yet another example, an electrochemical device comprises a plurality of membrane electrode assemblies (MEAs), each MEA having an ion-exchange membrane interposed between first and second electrode layers having an electrocatalyst and a gas diffusion layer, each MEA formed by a method including bonding a first side of the first electrode layer to a first side of the membrane, forming a partial MEA, forming the second electrode layer, positioning a plurality of venting members on a first side of the gas diffusion layer of the second electrode layer, bonding the second side of the membrane to a first side of the electrocatalyst of the second electrode layer while the second electrode layer is aqueous, and removing the venting members upon substantial removal of the at least one of the liquid and the vapor.

### BRIEF DESCRIPTION OF THE SEVERAL VIEWS OF THE DRAWING(S)

Figure 1 is an exploded isometric view of a membrane electrode assembly according to the prior art.
Figure 2 is an exploded isometric view of an electrochemical cell according to the prior art.
Figure 3 is an exploded isometric view of an electrochemical cell stack according to the prior art.
Figure 4 is an isometric view of an electrochemical cell stack according to the prior art.
Figure 5 is a cross-sectional view of a membrane electrode assembly according to the prior art.
Figures 6-9 are optical images of gas diffusion electrode layers manufactured by prior art methods.
Figure 10 is a scanning electron micrograph of a cross-section view of the electrode of Figure 7.
Figure 11 is a top view of a partial MEA formed according to an embodiment of the present invention.
Figure 12 is a top view of the partial MEA of Figure 11 and an electrode layer according to an embodiment of the present invention.
Figure 13 is an isometric view of an MEA formed according to an embodiment of the present invention.
Figure 14 is a top view of an MEA formed according to an embodiment of the present invention.
Figure 15 is an exploded top view of a partial MEA formed according to another embodiment of the present invention.
Figure 16 is a top view of an MEA formed according to another embodiment of the present invention.
Figure 17 is an exploded top view of an MEA formed according to another embodiment of the present invention.
Figure 18 is a scanning electron micrograph of a cross-section view of an electrode layer formed according to an embodiment of the present invention.

### DETAILED DESCRIPTION OF THE INVENTION

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with electrochemical systems and/or cells and/or fabrication of such cells such as, but not limited to, flow field plates, end plates, external circuits, reciprocal press bonding and/or double belt bonding have not been shown or described in detail to avoid unnecessarily obscuring descriptions of the embodiments.

Reference throughout this specification to "electrochemical systems", "fuel cells", "cell stack", "stack", and/or "electrolyzers" is not intended in a limiting sense, but is rather intended to refer to any device, apparatus, or system wherein a fuel and an oxidant are electrochemically converted to produce electrical power, or an external electrical current is passed between cell electrode layers, typically through water, resulting in generation of hydrogen and oxygen at the respective electrode layers.

Reference throughout this specification to "fuel" and/or "hydrogen" is not intended in a limiting sense, but is rather intended to refer to any reactant or gas separable into protons and electrons in a given chemical reaction to support electrochemical conversion to produce electrical power.

Reference throughout this specification to "oxidant" and/or "oxygen" is not intended in a limiting sense, but is rather intended to refer to any liquid or gas capable of oxidizing such as, but not limited to, oxygen, water, water vapor, or air.

Reference throughout this specification to "ion exchange membrane", "proton exchange membrane", "polymer electrolyte membrane" and/or "PEM" is not intended in a limiting sense, but is rather intended to refer to any membrane, structure or material capable of allowing ions of a first charge or polarity to pass across the membrane in a first direction while blocking the passage in the first direction of ions of a second charge or polarity, opposite to the first charge or polarity.

Reference throughout this specification to "anodes", "cathodes", "electrodes", "gas diffusion electrodes", "gas diffusion layers" and/or "electrode layers" is not intended in a limiting sense, but is rather intended to refer to any device, apparatus, layer or member that is electrically conductive, permeable to at least one of a gas and a liquid, and/or is capable of transferring protons and/or electrons.

Reference throughout this specification to "polytetrafluoroethylene", and/or "PTFE", and/or "TEFLON^{®}" is not intended in a limiting sense, but is rather intended to refer to any material, component, layer and/or member that comprises nonstick qualities and/or is capable of temporally protecting a surface while being easily removable.

Reference throughout the specification to "venting" or "vapor transmitting" is not intended in a limiting sense, but is rather intended to refer to any material, component, layer and/or member that allows the removal of a liquid and/or vapor.

In one embodiment as illustrated in Figure 11, a method of forming a membrane electrode assembly (MEA) includes first forming a partial MEA 100 using a wet-bonding approach, in which a first side of an ion-exchange membrane 102 is bonded to a first side of a first electrode layer 104 such as an anode, which in turn includes a gas diffusion layer 106 and an electrocatalyst 108. The electrocatalyst 108 may be interposed at the interface of the first electrode layer 104 and the ion-exchange membrane 102. To protect a second side of the ion-exchange membrane 102, a release sheet 110 such as polytetrafluoroethylene, commonly known by the brand name TEFLON^{®}, can be positioned on the second side of the ion-exchange membrane 102. The release sheet 110 can be fabricated from a homopolymer TEFLON^{®} sheet.

The method further includes bonding the partial MEA 100 to a second electrode layer 112 such as a cathode, illustrated in Figure 12. The second electrode layer 112 includes a gas diffusion layer 114 and an electrocatalyst 116. As illustrated in Figure 12, the release sheet 110 is removed prior to bonding the partial MEA 100 to the second electrode layer 112. Since the release sheet 110 is fabricated from a nonstick material such as TEFLON^{®}, it may easily be removed without damaging the second side of the ion-exchange membrane 102.

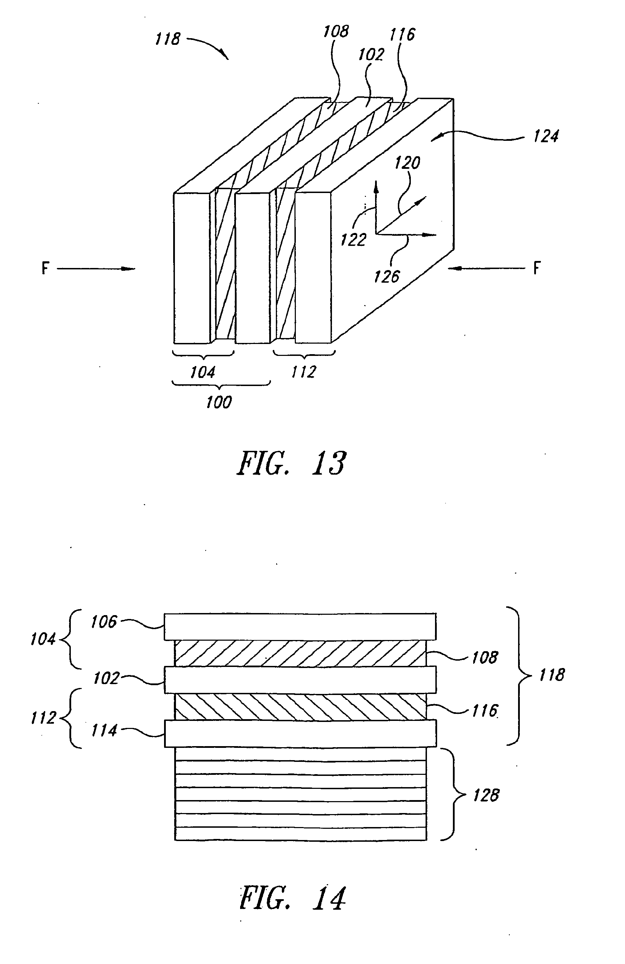

In the latter bonding process, the second side of the ion-exchange membrane 102 is bonded to a first side of the second electrode layer 112, which typically coincides with an exposed side of the electrocatalyst 116. Bonding takes place under a compressive force F and at an elevated temperature for a period of time, to form an MEA 118, illustrated in Figure 13. Since the second electrode layer 112 experiences the bonding temperature while being compressed against the partial MEA 100, the second electrode layer 112, such as the cathode, remains substantially free of cracks, defects and/or peaks that can lead to cracks in the electrocatalyst 116 and/or the ion-exchange membrane 102. Bonding temperatures typically range from about 120°C to about 300°C and bonding pressures are typically greater than about atmospheric pressure and less than about 40 bar. Bonding times may vary from about 0.1 second (for example, instantaneously) to about 10 minutes.

The electrocatalysts 108, 116 typically include an ionomer such as NAFION^{®}, which may be similar to that used for the ion-exchange membrane 102. An improved interface between the electrocatalysts 108, 116 and the ion-exchange membrane 102 may be observed if the ion-exchange material used in the electrocatalysts 108, 116 is the same as that used for the ion-exchange membrane 102; however, different materials may also be used. Additionally, or alternatively, the electrocatalysts 108, 116 may comprise other binders, for example, a fluororesin, such as PTFE.

In conventional MEAs, sources of potential defects during the bonding process include the shrinking of NAFION^{®}, which prevents proper bonding of the electrocatalyst to the ion-exchange membrane. However, in an embodiment of the present invention, the compressive forces F during bonding prevent the NAFION^{®} of the electrocatalyst 116 and/or of the ion-exchange membrane 102, or both, from shrinking or expanding along a first axis 120 and a second axis 122, which form a plane 124, parallel to a mating surface between the respective electrode layers 104, 112 and the ion-exchange membrane 102. The electrocatalyst 116 may be allowed to translate in a direction of a third axis 126, substantially perpendicular to the plane 124. Accordingly, the surface of the electrocatalyst 116 at the interface with the ion-exchange membrane 102 can substantially conform to the second side of the ion-exchange membrane 102 and result in a substantially smooth and contiguous mating surface.

In another embodiment of the present invention, to further induce the conformance of the electrocatalyst 116 of the second electrode layer 112 to the second side of the ion-exchange membrane 102, the second electrode layer 112, such as a cathode, can be in an aqueous state at the time the partial MEA 100 is bonded to the second electrode layer 112. In this process, when the bonding temperature is applied, steam may be generated, which may adversely affect the bonding process or result in corrosion and/or blistering of the components of the MEA 118.

To remove vapor and/or liquid, such as steam and/or water, that may have been generated during the bonding process, an escape path such as a plurality of venting, or vapor transmitting, members 128, for example seven venting members 128 as illustrated in Figure 14, is provided on a second side of the second electrode layer 112 to allow the removal of any fluid that may remain in the MEA 118. Venting members 128 may include papers, filters, foams or any other material that allows the removal of fluids such as steam and/or water. In other embodiments, nylon fabrics such as PEELPLY can be used for the venting members 128.

The bonding of the first electrode layer 104 to the ion-exchange membrane 102 and also of the partial MEA 100 to the second electrode layer 112 can be facilitated by methods well-known in the art such as double belt bonding as described in detail by U.S. Patent Application No. 2002/0192548. Alternatively, a reciprocating press may be employed to compact the gas diffusion layers 106, 114 and the electrocatalysts 108, 116 of the first and second electrode layers 104, 112, respectively, and bond the electrode layers 104, 112 to the ion-exchange membrane 102 according to the assembly sequence described herein.

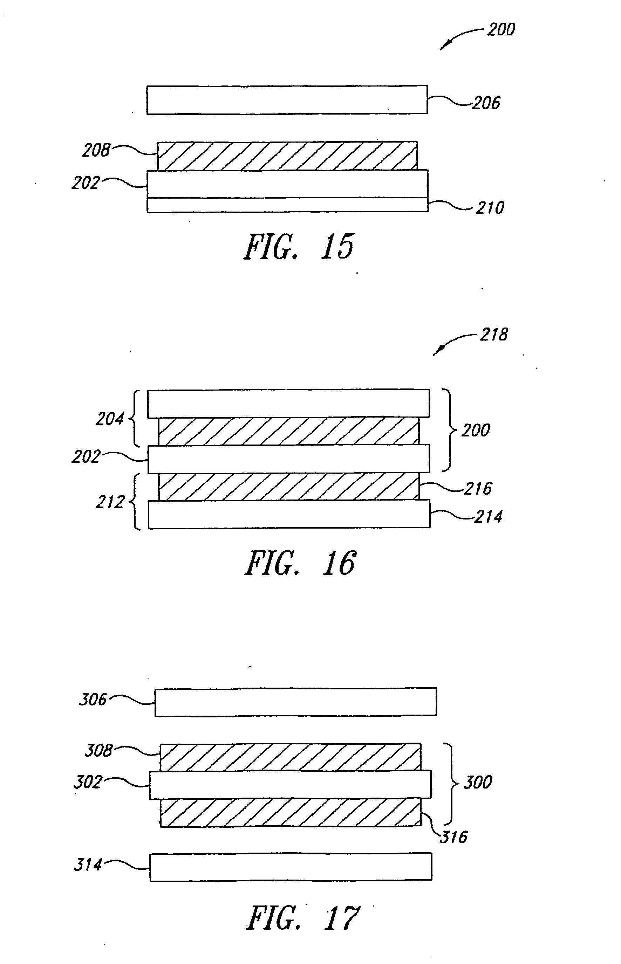

In yet another embodiment as illustrated in Figure 15, a method of forming an MEA 218 (Figure 16) includes forming a partial MEA 200 by first bonding and/or applying an electrocatalyst 208 to a first side of an ion-exchange membrane such as an ion-exchange membrane 202. Similar to the embodiment above, a second side of the ion-exchange membrane 202 may be temporarily protected with a release sheet 210 such as a TEFLON^{®} release sheet. Subsequently, an exposed side of the electrocatalyst 208 is bonded to a first gas diffusion layer 206 to form the partial MEA 200. The gas diffusion layer 206 and electrocatalyst 208 form a first electrode layer 204 (Figure 16), such as an anode.

Furthermore, as illustrated in Figure 16, the second side of the ion-exchange membrane 202, opposite the first gas diffusion layer 206, is bonded to a second electrode layer 212, such as a cathode, having a second gas diffusion layer 214 and a second electrocatalyst 216, to form the MEA 218. If a release sheet 210 is used, the release sheet 210 is peeled before bonding the ion-exchange membrane 202 to the second electrode layer 212. Bonding of the components of the MEA 218 can occur via application of a temperature and/or pressure as discussed in conjunction with the embodiment above. Furthermore, the second electrode layer 212 may be in aqueous form and applied onto the second side of the ion-exchange membrane 202 (*i.e*., an exposed side of the partial MEA 200).

In still another embodiment as illustrated in Figure 17, a method of forming an MEA comprises bonding and/or applying first and second electrocatalysts 308, 316 to opposing first and second sides of an ion-exchange membrane 302 to form a partial MEA 300. The method further includes bonding opposing exposed sides of the partial MEA 300, which respectively coincide with exposed sides of the first and second electrocatalysts 308, 316, to opposing first and second gas diffusion layers 306, 314, to form the MEA.

In any of the embodiments herein, at least one adhesive layer may be applied between any two components of the MEA to promote bonding of the components. The at least one adhesive layer may contain polymeric, ionomeric, or conductive materials, or mixtures thereof, to promote adhesion between the components. The polymeric materials may be, for example, hydrophobic or hydrophilic, depending on the properties desired. In some cases, an ionomeric material may be desirable to provide the desired water transfer and/or proton transfer properties through the adhesive layer. These materials may be dissolved in a suitable liquid and applied to the appropriate surfaces, such as a surface of the gas diffusion layers, catalyst layers or ion-exchange membranes, prior to applying temperature for bonding these components. The at least one adhesive layer may be applied to the various MEA components by any method known in the art, such as spraying, coating, screen-printing, and decal-transfer.

### EXAMPLE (not according to the invention)

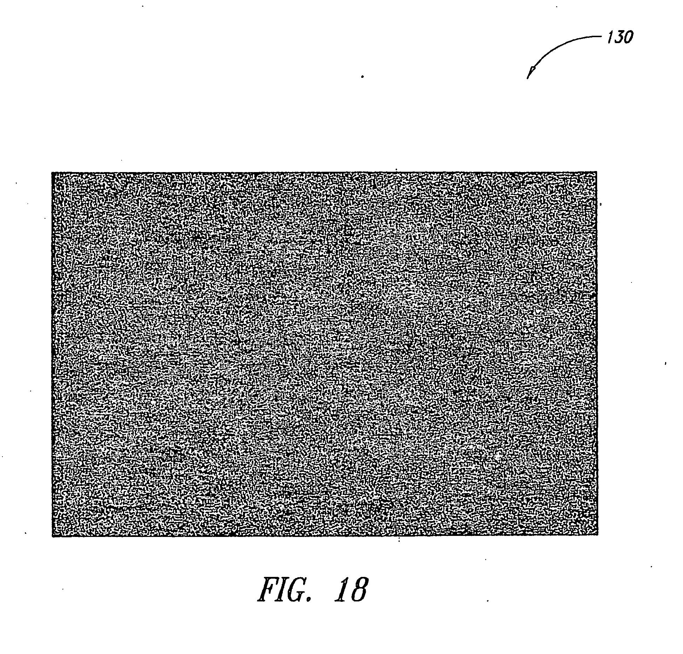

A partial MEA was prepared using Nafion® membranes supplied by DuPont and TGP-H-060 carbon fiber substrates supplied by Toray Industries, Inc. The carbon fiber substrates were first treated by dipping them into a solution of PTFE and then sintered. Each was then coated with a slurry of carbon particles and PTFE to form a sublayer on one surface of the substrate, and then sintered to form a gas diffusion layer. A cathode electrocatalyst layer comprising a Pt-based catalyst dispersed in Nafion® ionomer and deionized water was then coated on top of the sublayer to form a cathode electrode. The partial MEA was then prepared by placing the cathode electrode against a surface of the membrane such that the electrocatalyst layer was interposed between the membrane and the sublayer. A sheet of PTFE was placed against the opposing exposed surface of the membrane to protect the membrane during bonding. The assembly was then placed into a bonding press heated to about 150°C and subjected to 15 bar bonding pressure for about 2.5 minutes in the heated bonding press to form a partial MEA. Figure 18 is an optical image of a surface 130 of the cathode electrocatalyst layer 112 of the resulting partial MEA formed by the method described above. In contrast to the surfaces 24 of the electrocatalyst layer formed by existing methods and depicted in Figures 6-9, the surface 130 of the cathode electrocatalyst layer formed by the method described above exhibits a smooth and consistent structure, which is free of cracks.

From the foregoing it will be appreciated that, although specific embodiments of the invention have been described herein for purposes of illustration, various modifications may be made.

## Claims

1. A method of forming a membrane electrode assembly (MEA) (118) having an ion-exchange membrane (102) interposed between first and second electrode layers (104, 112), the method comprising:
bonding a first side of the first electrode layer (104) including a first electrocatalyst layer (108) and a first gas diffusion layer (106), to a first side of the membrane (102), at a first time, to substantially support the membrane (102) and form a partial MEA (100); and
bonding the partial MEA (100) to the second electrode layer (112) including a second electrocatalyst (116) and a second gas diffusion layer (114) at an elevated temperature under a compressive force, at a second time, subsequent to the first time,, to achieve substantial contiguity between a second side of the membrane (102) and a first side of the second electrode layer (112),
**characterized in that**:
the partial MEA (100) is bonded to the second electrode layer (112) while the second electrode layer (112) is at least partially aqueous; and
the method further comprises providing an escape path for at least one of a vapor and a liquid adjacent a second side of the second electrode layer (112) until the at least one of the vapor and the liquid is substantially removed.

2. The method of Claim 1, further comprising: interposing the second electrocatalyst layer (116) between the membrane (102) and the second gas diffusion layer (114).

3. The method of Claim 2, further comprising: allowing at least one of the second side of the membrane (102) and a first side of the second electrocatalyst (116) to translate in a direction of a third axis (126), conforming a shape of the first side of the second electrocatalyst (116) to the second side of the membrane (102).

4. The method of Claim 1, further comprising: temporarily positioning a release sheet (110) on the second side of the membrane (102) of the partial MEA (100) when bonding the first electrode layer (104) to the membrane (102), and removing the release sheet (110) prior to bonding the partial MEA (100) to the second electrode layer (112).

5. The method of Claim 4 wherein the release sheet (110) is polytetrafluoroethylene.

6. The method of Claim 1 wherein the escape path comprises venting means (128) for removing at least one of water and steam.

7. The method of Claim 6 wherein the venting means (128) comprises a plurality of filter papers.

8. The method of Claim 6 wherein the venting means (128) comprises at least one nylon release fabric.

9. The method of Claim 1 wherein the first electrode layer (104) comprises an anode and the second electrode layer (112) comprises a cathode.

10. The method of Claim 1 wherein bonding occurs at a temperature between about 120°C and about 300°C.

11. The method of Claim 1 wherein bonding occurs at a pressure between greater than about atmospheric pressure and less than about 40 bar.

12. The method of Claim 1 wherein bonding occurs for a duration of time between about 0.1 seconds and about 10 minutes.

13. A method of forming a membrane electrode assembly (MEA) (218) having an ion-exchange membrane (202) interposed between first and second electrode layers (204, 212), the method comprising:
bonding a first side of the membrane (202) to a first side of a first electrocatalyst layer (208) at a first time;
bonding a second side of the first electrocatalyst layer (208) to a first side of a first gas diffusion layer (206) at a second time, subsequent to the first time, to form a partial MEA (218), the first electrocatalyst layer (208) and the first gas diffusion layer (206) forming the first electrode layer (204); and
bonding a second side of the membrane (202), opposing the first side, to the second electrode layer (212) at a third time at an elevated temperature under a compressive force, subsequent to the second time;
**characterized in that**:
the partial MEA (200) is bonded to the second electrode layer (212) while the second electrode layer (212) is at least partially aqueous; and
the method further comprises providing an escape path for at least one of a vapor and a liquid adjacent a second side of the second electrode layer until the at least one of the vapor and the liquid is substantially removed.

14. The method of Claim 13 wherein the escape path comprises venting means (128) for removing at least one of water and steam.

15. The method of Claim 13 wherein bonding occurs at a temperature between about 120°C and about 300°C.

16. The method of Claim 13 wherein bonding occurs at a pressure between greater than about atmospheric pressure and less than about 40 bar.

## Patentansprüche

1. Verfahren zum Herstellen einer Membran-Elektroden-Einheit (MEA) (118) mit einer lonen-Austausch-Membran (102), die zwischen einer ersten und einer zweiten Elektrodenschicht (104, 112) eingefügt ist, wobei das Verfahren Folgendes umfasst:
zu einem ersten Zeitpunkt Verbonden einer ersten Seite der ersten Elektrodenschicht (104), die eine erste Elektrokatalysatorschicht (108) und eine erste Gasdiffusionsschicht (106) umfasst, mit der ersten Seite der Membran (102), so dass die Membran (102) im Wesentlichen verstärkt und eine teilweise MEA gebildet wird (100); und
zu einem nach dem ersten Zeitpunkt gelegenen zweiten Zeitpunkt Verbonden der teilweisen MEA (100) mit der zweiten Elektrodenschicht (112), die einen zweiten Elektrokatalysator (116) und eine zweite Gasdiffusionsschicht (114) umfasst, bei erhöhter Temperatur und unter Druck, so dass es im Wesentlichen zu einem Aneinanderliegen einer zweiten Seite der Membran (102) und einer ersten Seite der zweiten Elektrodenschicht (112) kommt,
**dadurch gekennzeichnet, dass**:
die teilweise MEA (100) mit der zweiten Elektrodenschicht (112) verbondet wird, während die zweite Elektrodenschicht (112) zumindest teilweise wasserhaltig ist; und
das Verfahren ferner die Bereitstellung eines Austrittswegs für entweder Dampf oder Flüssigkeit oder beides an einer zweiten Seite der zweiten Elektrodenschicht (112) umfasst, durch den entweder der Dampf oder die Flüssigkeit oder beides weitgehend abgeführt werden.

2. Verfahren nach Anspruch 1, bei dem ferner die zweite Elektrokatalysatorschicht (116) zwischen die Membran (102) und die zweite Gasdiffusionsschicht (114) eingefügt wird.

3. Verfahren nach Anspruch 2, bei dem ferner eine Verlagerung entweder der zweiten Seite der Membran (102) oder der ersten Seite des zweiten Elektrokatalysators (116), oder von beiden, in Richtung einer dritten Achse (126) ermöglicht wird, so dass die Form der ersten Seite des zweiten Elektrokatalysators (116) auf die zweite Seite der Membran (102) übertragen wird.

4. Verfahren nach Anspruch 1, bei dem ferner eine Trennfolie (110) zeitweilig auf die zweite Seite der Membran (102) der teilweisen MEA (100) platziert wird, während die erste Elektrodenschicht (104) mit der Membran (102) verbondet wird, und die Trennfolie (110) vor dem Verbonden der teilweisen MEA (100) mit der zweiten Elektrodenschicht (112) entfernt wird.

5. Verfahren nach Anspruch 4, wobei die Trennfolie 110) aus Polytetrafluorethylen besteht.

6. Verfahren nach Anspruch 1, wobei der Austrittsweg ein Auslasselement (128) zum Abführen von entweder Wasser oder Dampf oder beidem umfasst.

7. Verfahren nach Anspruch 6, wobei das Auslasselement (128) mehrere Filterpapiere umfasst.

8. Verfahren nach Anspruch 6, wobei das Auslasselement (128) mindestens ein Nylon-Trenngewebe umfasst.

9. Verfahren nach Anspruch 1, wobei die erste Elektrodenschicht (104) eine Anode und die zweite Elektrodenschicht (112) eine Kathode umfasst.

10. Verfahren nach Anspruch 1, wobei das Verbonden bei einer Temperatur zwischen ungefähr 120 °C und ungefähr 300 °C erfolgt.

11. Verfahren nach Anspruch 1, wobei das Verbonden bei einem Druck über ungefähr Atmosphärendruck und unter ungefähr 40 Bar erfolgt.

12. Verfahren nach Anspruch 1, wobei das Verbonden für eine Dauer zwischen ungefähr 0,1 Sekunden und ungefähr 10 Minuten erfolgt.

13. Verfahren zum Herstellen einer Membran-Elektroden-Einheit (MEA) (218) mit einer lonen-Austausch-Membran (202), die zwischen einer ersten und einer zweiten Elektrodenschicht (204, 212) eingefügt ist, wobei das Verfahren Folgendes umfasst:
zu einem ersten Zeitpunkt Verbonden einer ersten Seite der Membran (202) mit einer ersten Seite einer ersten Elektrokatalysatorschicht (208);
zu einem nach dem ersten Zeitpunkt gelegenen zweiten Zeitpunkt Verbonden einer zweiten Seite der ersten Elektrokatalysatorschicht (208) mit einer ersten Seite einer ersten Gasdiffusionsschicht (206), so dass eine teilweise MEA (218) gebildet wird, wobei die erste Elektrokatalysatorschicht (208) und die erste Gasdiffusionsschicht (206) die erste Elektrodenschicht (204) bilden; und
zu einem nach dem zweiten Zeitpunkt gelegenen dritten Zeitpunkt Verbonden einer der ersten Seite gegenüberliegenden zweiten Seite der Membran (202) unter erhöhter Temperatur und unter Druck mit der zweiten Elektrodenschicht (212);
**dadurch gekennzeichnet, dass**:
die teilweise MEA (200) mit der zweiten Elektrodenschicht (212) verbondet wird, während die zweite Elektrodenschicht (212) zumindest teilweise wasserhaltig ist; und
das Verfahren ferner an einer zweiten Seite der zweiten Elektrodenschicht einen Austrittsweg für entweder Dampf oder Flüssigkeit oder beides umfasst, durch den entweder der Dampf oder die Flüssigkeit oder beides weitgehend abgeführt werden.

14. Verfahren nach Anspruch 13, wobei der Austrittsweg ein Auslasselement (128) zum Abführen von entweder Wasser oder Dampf oder beidem umfasst.

15. Verfahren nach Anspruch 13, wobei das Verbonden bei einer Temperatur zwischen ungefähr 120 °C und ungefähr 300 °C erfolgt.

16. Verfahren nach Anspruch 13, wobei das Verbonden bei einem Druck über ungefähr Atmosphärendruck und unter ungefähr 40 Bar erfolgt.

## Revendications

1. Procédé destiné à former un ensemble d'électrode à membrane (MEA) (118) ayant une membrane (102) d'échange d'ions intercalée entre une première et une seconde couche (104, 102) d'électrode, le procédé consistant à relier un premier côté de la première couche (104) d'électrode comprenant une première couche (108) d'électrocatalyseur et une première couche (106) de diffusion de gaz, à un premier côté de la membrane (102), dans un premier temps, pour supporter substantiellement la membrane (102) et pour former une MEA (100) partielle ; et à relier la MEA (100) partielle à la seconde couche (112) d'électrode comprenant un second électrocatalyseur (116) et une seconde couche (114) de diffusion de gaz à une température élevée à une certaine force de compression, dans un second temps, successivement au premier temps, pour obtenir une contigüité substantielle entre un second côté de la membrane (102) et un premier côté de la seconde couche (112) d'électrode, **caractérisé en ce que** la MEA (100) partielle est reliée à la seconde couche (112) d'électrode tandis que la seconde couche (112) d'électrode est au moins partielle aqueuse ; et le procédé consiste en outre à fournir un chemin d'évacuation d'une vapeur et/ou d'un liquide adjacent au second côté de la seconde couche (112) d'électrode jusqu'à ce que la vapeur et/ou le liquide soit substantiellement éliminé(e).

2. Procédé selon la revendication 1, consistant en outre à : intercaler la seconde couche (116) d'électrocatalyseur entre la membrane (102) et la seconde couche (114) de diffusion de gaz.

3. Procédé selon la revendication 2, consistant en outre à : permettre au moins à le second côté de la membrane (102) et/ou à un premier côté du second électrocatalyseur (116) de translater dans une direction d'un troisième axe (126), correspondant à une forme du premier côté du second (116) électrocatalyseur (116) vers le second côté de la membrane (102).

4. Procédé selon la revendication 1, consistant en outré à : positionner temporairement une feuille de libération (110) sur le second côté de la membrane (102) de la MEA (100) partielle lors de la liaison de la première couche (104) d'électrode à la membrane (102), et à éliminer la feuille de libération (110) avant la liaison de la MEA (100) partielle à la seconde couche (112) d'électrode.

5. Procédé selon la revendication 4, la feuille de libération (110) étant en polytétrafluoréthylène.

6. Procédé selon la revendication 1, le chemin d'évacuation comprenant un moyen (128) de mise à l'air libre destiné à éliminer l'eau et/ou la vapeur.

7. Procédé selon la revendication 6, le moyen (128) de mise à l'air libre comprenant une pluralité de papiers filtres.

8. Procédé selon la revendication 6, le moyen (128) de mise à l'air libre comprenant au moins un tissu de libération en nylon.

9. Procédé selon la revendication 1, la première couche (104) d'électrode comprenant une anode et la seconde couche (112) d'électrode comprenant une cathode.

10. Procédé selon la revendication 1, la liaison se produisant à une température comprise entre environ 120°C et environ 300°C

11. Procédé selon la revendication 1, la liaison se produisant à une pression étant environ supérieure à la pression atmosphérique et environ inférieure à 40 bar.

12. Procédé selon la revendication 1, la liaison se produisant pendant une durée de temps comprise entre environ 0,1 secondes et environ 10 minutes.

13. Procédé de formation d'un ensemble d'électrode à membrane (MEA) (218) ayant une membrane (202) d'échange d'ions intercalée entre une première et d'une seconde couche (204, 212) d'électrode, le procédé consistant à : relier un premier côté de la membrane (202) à un premier côté d'une première couche (208) d'électrocatalyseur dans un premier temps : relier un second côté de la première couche (208) d'électrocatalyseur à un premier côté d'une première couche (206) de diffusion de gaz dans un second temps, successivement au premier temps, pour former une MEA (218) partielle, la première couche (208) et la première couche (206) de diffusion de gaz formant la première couche (204) d'électrode ; et relier un second côté de la membrane (202), opposée au premier côté, à la seconde couche (212) d'électrode dans un troisième temps à une température élevée à une certaine force de compression subséquente au second temps, **caractérisé en ce que** la MEA (200) partielle est reliée à la seconde couche (212) d'électrode tandis que la seconde couche (212) d'électrode est au moins en partie aqueuse ; et le procédé consiste en outre à fournir un chemin d'évacuation pour une vapeur et/ou un liquide adjacent à un second côté de la seconde couche d'électrode jusqu'à ce qu'au moins la vapeur et le liquide soit substantiellement éliminé(e).

14. Procédé selon la revendication 13, le chemin d'évacuation comprenant un moyen de mise à l'air libre (128) destiné à éliminer l'eau et/ou la vapeur.

15. Procédé selon la revendication 13, la liaison se produisant à une température comprise entre environ 120 °c et environ 300 °C.

16. Procédé selon la revendication 13, la liaison se produisant à une pression environ supérieure à la pression atmosphérique et environ inférieure à 40 bar.
